# EUROPEAN PATENT SPECIFICATION

(11) **EP 4 010 860 B1**
(45) Date of publication and mention of the grant of the patent: **05.11.2025**
(21) Application number: 20768722.9
(22) Date of filing: 10.08.2020
(51) Int. Cl.: G06Q 10/04, G06Q 10/08, G06Q 10/10, G06Q 40/00, G06Q 40/06

(54) **METHOD AND APPARATUS TO PROCESS DATA**
VERFAHREN UND VORRICHTUNG ZUM VERARBEITEN VON DATEN
PROCÉDÉ ET APPAREIL POUR TRAITER DES DONNÉES

(30) Priority: 09.08.2019 IT 201900014562
(43) Date of publication of application: 15.06.2022
(73) Proprietor: Modefinance S.r.l., 34149 Trieste (IT)
(72) Inventor: PEDIRODA, Valentino, 34135 Trieste (IT); CIPRIAN, Mattia, 33010 Tavagnacco (IT); ZIRALDO, Simone, 34075 San Canzian d'Isonzo (IT); SORRENTINO, Andrea, 34151 Trieste (IT)
(74) Representative: Petraz, Davide Luigi
(86) International application number: PCT/IT2020/050201
(87) International publication number: WO 2021/028956

(56) References cited:
- US-A1- 2007 106 591
- US-A1- 2016 132 968
- US-B2- 8 442 908

## Description

### FIELD OF THE INVENTION

Embodiments described here concern a method to process data, in particular to assess a financial risk, relating to a financial transaction between an investor and one or more counterparts, the corresponding apparatus and a computer program that determines the execution of the method on the corresponding apparatus. The present invention is applicable, preferentially but not restrictively, in the financial field, for example for the management of financial exposures, protection from the risk of insolvency of counterparts, management of investment portfolios and exposures, on the part of Fintech companies, investment funds, holding companies and financial institutions of various types.

### BACKGROUND OF THE INVENTION

In the financial field, some types of transactions are known, typically referred to as financial transactions, which entail an investment, for example an exchange of a sum of money, between an investor and a counterpart, which has a result, for example an economic return, deferred over time.

This investment, deferred over time, produces a variation in the capital, which is deferred over time for the investor, the trend of which depends on risk factors due to events that may occur over the deferred time.

The characteristic of deferred time therefore attributes a character of "financial risk" associated with the financial transaction, linked to the possibility that the variation in capital might be an advantage or a disadvantage for the investor.

It is therefore essential for the investor to be able to foresee, with the greatest possible accuracy, the financial risk associated with a specific financial transaction that is about to be carried out.

In this context, methods and apparatuses are known, configured to assess the financial risk for the investor associated with the financial transaction, starting from the information available on the counterparts.

The use of these methods and apparatuses is particularly advantageous for investors, as they can estimate the financial risk associated with a financial transaction before undertaking it.

It is also known that the accuracy of the assessment of the financial risk depends on the quality and quantity of the information available on the counterparts.

For example, to increase the reliability of the risk calculation for large financial institutions, it is necessary to accurately assess all the indicators available, such as balance sheets, shares, affiliated companies, subsidiaries, commercial partners, economic data on the countries in which the institution operates.

In recent years, with the advance of information technologies, there has been a significant increase in the quantity of information that can potentially be used to calculate financial risk.

For example, the patent document WO2015/191592A1 shows a method to generate indicators of the financial health of economic activities, based on publicly and non-publicly available information.

For example, patent documents US 2003/0115133A1 and US 7711697B2 show a system and method that employs a form of artificial intelligence known as a neural network, to manage and process the large quantity of information used to assess a risk.

Other known methods, described in document US 20150149247 A1, employ predictive models based on two levels of analysis, to identify patterns in the data available and to generate rankings.

However, if on the one hand the large quantity of information allows to obtain accurate and reliable risk assessments, on the other hand it produces a series of technical problems and inconveniences, linked to the technical difficulties of managing and processing the data available and to the increase in the complexity of the procedures, both in terms of calculation and also in terms of analysis by the user.

Document US 2007/0106591 A1 describes a method and a tool to manage bond transactions (CDO - Collateralized Debt Obligations) but does not allow to perform different credit risk assessments.

Document US 2016/0132968 A1 describes an apparatus and a method to manage an investment portfolio, but this solution does not allow to perform different assessment models either.

Document US 8 442 908 B2 describes systems and methods for asset evaluation.

One disadvantage of known methods is therefore that the enormous quantity of data to be processed requires a management time that is prohibitive for the user, who must assess which data are relevant for the purposes of the calculation, and which are not, and which are the operations relevant and significant for the purposes of assessing the risk of the financial transaction, and which are not.

A further disadvantage of known methods is that they are often based on rigid analysis procedures, that is, in which the sequence of operational steps required to analyze the data available and supply an assessment of the financial risk is preset and cannot be modified by the user.

This disadvantage makes known methods inflexible and difficult to adapt to assess the risk associated with financial transactions of a variable type, since even a slight variation in the pre-set analysis procedures entails high development times and costs.

Furthermore, in the event of an error or in the event that it is necessary to refine a calculation already performed, these assessments and the execution of the programs must be repeated entirely, leading to further waste of time and consumption of computational resources.

Furthermore, in the event that the assessment of the financial risk is performed by different users in collaboration with each other, for example by a team of geographically distant experts, known methods based on rigid analysis procedures require each user to perform a separate assessment, setting his/her own rigid analysis procedure, separate and distinct from the analysis procedure adopted by another user. This disadvantage makes known methods inefficient when used by a team of users.

Another disadvantage of known methods is that when they are performed with limited computing resources, for example a personal computer, the memory available for data storage may be insufficient.

Furthermore, the processing of the data may be too slow to supply the financial risk calculation within a reasonable time.

Furthermore, even if the methods are performed with greater computing resources, the sequence of operations could be poorly distributed among the available resources, leading to an inefficient management of the computing resources, and therefore of time and efficiency.

There is therefore a need to perfect a method and an apparatus which can overcome at least one of the disadvantages of the state of the art.

In particular, one purpose of the present invention is to provide a method and an apparatus which allow the user to assess the financial risk in a flexible manner, that is, being able to adapt the calculation to the type of data available and/or the type of financial transactions to be made.

Another purpose of the present invention is to provide a method which can be used to carry out the assessment of the financial risk on financial transactions of variable type, without requiring long times and high updating, planning and development costs.

Another purpose of the present invention is to provide a method and an apparatus which allow them to be used efficiently even by different users in collaboration with each other.

Another purpose of the present invention is to provide a method and an apparatus that allow the user to assess the financial risk by analyzing the quantity of data available quickly and efficiently.

Another purpose of the present invention is to provide a method and an apparatus which allow to process the quantity of data in a fast and efficient manner, both in the case where limited computational resources are available and also in the case where there is a great availability of computational resources.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, embodiments described here concern a method and an apparatus to process data, in particular to assess a financial risk relating to a financial transaction that occurs between an investor and one or more counterparts, which overcome the limits of the state of the art and eliminate the defects present therein.

Other embodiments described here also concern a computer program storable in a medium readable by a computer that contains the instructions which, once performed by the apparatus described here, determine the execution of the method described here.

The method of the present invention provides to:
- prepare a database comprising characteristic data relating to one or more financial entities;
- select, from the financial entities, the one or more counterparts of the investor associated with the financial transaction;
- supply a plurality of operating modules, respectively associated with analysis functions selectively combinable in sequence with each other, wherein each analysis function is configured at least to assign a partial risk score to a subset of characteristic data, associated at least with a counterpart, and/or to one or more partial risk scores, supplied by any one of the plurality of analysis functions whatsoever;
- select and enable one or more operating modules to define a desired analysis procedure, selectively combining the analysis functions according to a desired sequence, so that at least the last analysis function assigns an overall risk score to the partial risk scores supplied by some or all of the previous analysis functions;
- performing the desired analysis procedure, obtaining the overall risk score associated with the financial risk of the financial transaction.

According to some embodiments, the method in particular provides to store the plurality of operating modules in at least one storage unit, providing for each of them respective sequences of instructions suitable to perform a specific analysis function.

The method also provides to display the operating modules by means of an interface, through which a user can on each occasion select and enable those of interest and disable the remaining ones, and connect them in sequence to each other according to a determinate order of execution, in order to obtain on each occasion the sequence of instructions necessary to carry out the desired analysis.

Therefore, by choosing among the various operating modules stored in the storage unit, the user can define a plurality of different types of analyzes, in a simple and substantially automatic manner, without having to provide different and separate programs for types of analyzes that do not communicate with each other.

According to the invention, the evaluations and the data obtained by a determinate analysis function associated with an operating module can be used in sequence by the next module, in order to carry out its own part of the analysis, until the overall risk score is supplied to the user as a final result. In other words, the method according to the invention allows to modify the type of analysis without needing a total reconstruction of the technological flow, thus saving resources and time. By way of example, thanks to the modularity and versatility given by the operating modules and by the analysis functions that can be combined with each other, it is possible to pass from an equity investment risk analysis to a credit risk analysis without having to reconstruct everything, simply enabling and adding one or more operating modules.

The apparatus of the present invention comprises:
- one or more processing units;
- one or more storage units,
- at least one control and user interface unit;
- a communication network, configured to put the units in communication;

in at least one of the storage units there being stored a database comprising characteristic data relating to one or more financial entities;
the control and user interface unit being configured at least to allow a user to select, from the financial entities, the one or more counterparts of the investor associated with the financial transaction;
in at least one of the storage units there being stored a plurality of operating modules, each associated with a determinate analysis function, which are selectively combinable in sequence with each other, wherein each analysis function is configured at least to assign a partial risk score to a subset of characteristic data, associated at least with a counterpart, and/or to one or more partial risk scores, supplied by any one of the plurality of analysis functions whatsoever;
the control and user interface unit being configured at least to allow a user to select on each occasion one or more from the plurality of operating modules available and define a desired analysis procedure, selectively combining the analysis functions according to a desired sequence, so that at least the last analysis function assigns an overall risk score to the partial risk scores supplied by some or all of previous analysis functions;
the one or more processing units being configured at least to perform the desired analysis procedure, obtaining the overall risk score associated with the financial risk of the financial transaction.

The fact that different operating modules suitable to carry out different analysis functions are made available, and that the analysis functions can be selectively combined in sequence with each other, allows to define, on each occasion, the procedures for analyzing the desired characteristic data, so as to construct, on each occasion, the most appropriate type of analysis based on the type of financial transaction to be evaluated.

This characteristic allows to overcome the disadvantages of known methods based on rigid calculation procedures, allowing to provide a flexible method, which allows a user to evaluate the financial risk of financial transactions even of very different types, without having to invest time and costs for updating, designing and developing new platforms.

The operating modules, in fact, substantially constitute blocks of programs and instructions that can be activated and deactivated according to requirements and as a function of the analyzes to be performed. This embodiment confers high versatility upon the processing method and apparatus according to the invention.

In fact, in this way it is no longer necessary to prepare dedicated programs for each analysis function, substantially requiring, in the event that two or more programs are necessary, a double amount of storage space, but it is possible to provide a single program, within which the operating modules dedicated to the single functions can share at least part of the instructions and therefore it is possible to reduce the overall memory space.

There is also a considerable increase in versatility both on behalf of the service provider and also of the user, allowing on the supplier side to enable a user for one or more operating modules, for example depending on the type of license agreement signed, and on the user side to be able to choose and change the type of analysis, or disable unnecessary operating modules in order to save the amount of computation memory required.

Furthermore, in the event that the data processing, in particular the financial risk assessment, is performed by different users in collaboration with each other, for example by a team of experts geographically distant from each other, this characteristic allows different users to interact with each other, so that each user can modify the analysis procedure, adding and/or removing and/or modifying the analysis functions, acting directly on the individual operating modules, thus avoiding having to each repeat the entire procedure.

Advantageously, this characteristic allows to reduce the complexity and times of calculation associated with the data processing, in particular with the assessment of the financial risk, and with the customization of the analysis procedure.

Furthermore, this characteristic allows to process the data, in particular to evaluate the financial risk, in an incremental manner, that is, by evaluating the partial risk scores supplied by the analysis functions already performed, before performing the new analysis functions. This allows, compared to other more rigid and less flexible known methods, to adapt the analysis procedure to the results obtained on each occasion, with a significant improvement in the accuracy of the calculation, and a reduction in time and waste of computational resources.

Furthermore, it is possible to perform the independent analysis functions in parallel, with great savings in time and computational resources.

Furthermore, in the event that the risk assessment has to be repeated, for example because the user decides to include new characteristic data in the calculation, it is possible to perform only the new analysis functions, processing the new data, instead of performing the whole analysis procedure again from the beginning.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic representation of an analysis procedure which can be defined by means of a method in accordance with some embodiments of the present invention;
- figs. 2 and 3 schematically show possible embodiments of an apparatus to process data.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

In the present description, the expression "financial transaction" is understood to include all activities that involve at least one investment, for example an exchange of a sum of money, which occurs between an investor and a counterpart, which has a temporally deferred consequence, for example an economic return.

The expression "financial transaction" comprises a plurality of transactions, such as for example the issue of bonds, mini bonds, shares, financial securities, shareholdings, the purchase and/or sale of commercial and warehouse invoices, factoring transactions, presentation and evaluation of guarantees, project financing transactions, invoice trading.

The counterparts of the investor are financial entities directly associated and/or indirectly associable with the financial transaction the financial risk of which is to be assessed.

The financial entity can be any entity whatsoever, both physical and also legal, to which an economic activity is attributable which can be expressed through economic indicators, and which exercises, or can be the object of, activities of financial interest, which can be concretized into financial transactions.

Financial entities can comprise financial, industrial and commercial entities and organizations of various types, for example joint stock companies, limited liability companies, financial companies, consulting companies, companies of various types, in particular financial, industrial, commercial, service companies, banks, insurance companies, investment funds, equity portfolios, Factors, real estate brokerage companies, asset management companies, or even individuals.

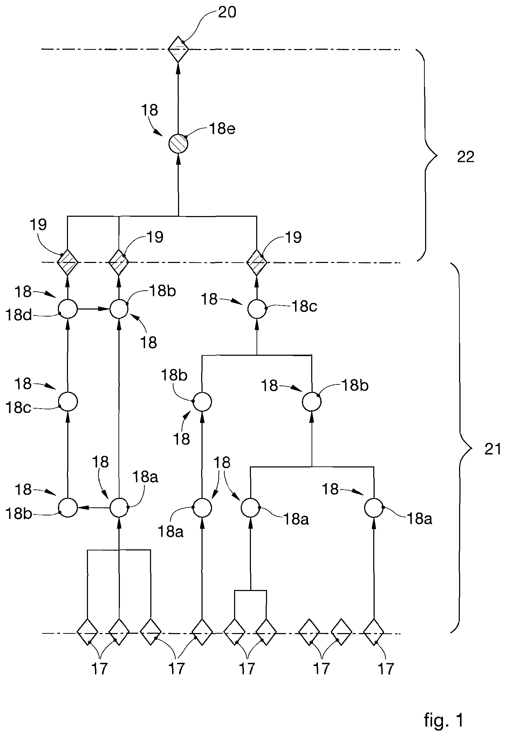

Embodiments described here concern a method to process data, in particular to assess the financial risk relating to a financial transaction between an investor and one or more counterparts, by means of a desired analysis procedure, as shown by way of example in fig. 1.

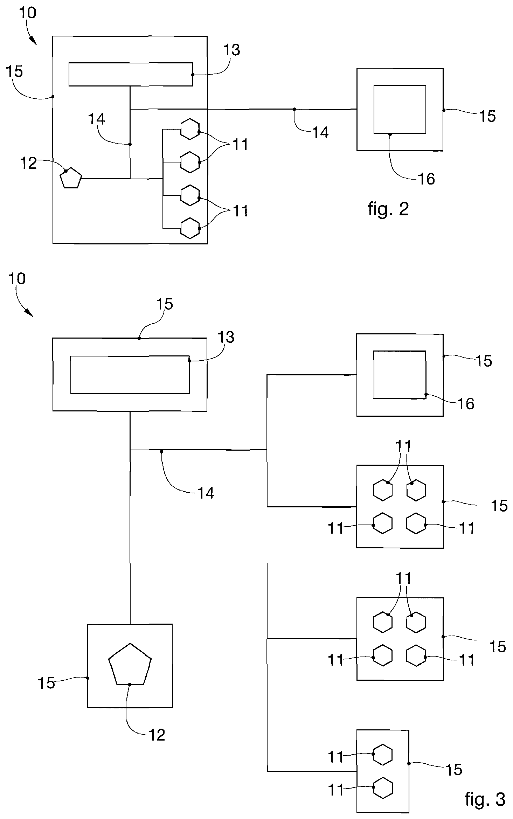

Embodiments described here also concern an apparatus 10 to process data, in particular to assess financial risk, possible embodiments of which are shown by way of example in figs. 2 and 3.

Further embodiments also concern a computer program, which can be stored in a medium readable by a computer, which contains instructions which, once performed by the apparatus 10 described here, determine the execution of the method described here.

The apparatus 10 can comprise:
- one or more processing units 11;
- one or more storage units 12,
- at least one control and user interface unit 13;
- a communication network 14, configured to put said units 11, 12, 13 in communication.

The processing unit 11 can comprise any form whatsoever of computer processor usable in the IT field, for example one or more processors of the CPU, GPU, GP-GPU type, possibly multi-core, and possibly organized into computing nodes interconnected according to optimal configurations in order to optimize computing capacity.

In some embodiments, the processing unit 11 can also comprise circuits, electronic boards, quick access memories (RAM), cache memories and circuits, governed by the processors.

The storage unit 12 can comprise any medium whatsoever on which data in digital format can be stored, such as hard disks, mass memory, fast access memory (RAM), read only memory (ROM), floppy discs, CD-ROMs, USB devices, or any other form of local or remote digital storage.

The storage unit 12 can also comprise instructions, which can be processed by the processing unit 11.

The control and user interface unit 13 is configured to allow the user to interface with the apparatus 10 and control its functioning, and in this sense the processing unit 11, the storage unit 12 and the communication network 14 can be governed by the control and user interface unit 13.

In embodiments schematically described by means of fig. 2, the processing unit 11, the storage unit 12 and the control and user interface 13 unit can be provided in a single electronic device 15, and the communication network 14 can be configured as electronic circuits, possibly provided in one or more electronic boards, which put the units 11, 12, 13 in communication.

In embodiments schematically described by means of fig. 3, the processing unit 11, storage unit 12 and the control and user interface unit 13 can be provided in different electronic devices 15, and the communication network 14 can be configured as an internet, or LAN, or other type of network, suitable to put the units 11, 12, 13 in communication.

In these embodiments, the apparatus 10 can be based on a "cloud" type infrastructure, in which the different units are physically provided on different devices, connected and coordinated with each other by means of determinate data distribution and operational functioning procedures, and interfaced with the user by means of virtual machines.

In some embodiments, the method initially provides to prepare a database comprising data, in particular characteristic data 17 relating to one or more financial entities, which can be stored in at least one storage unit 12 of the apparatus 10.

The characteristic data 17 can comprise public data, that is, publicly available for consultation, such as for example balance sheet or negativity data published online.

The characteristic data 17 can also comprise private data, for example transactional data originating from management software connected to the financial entities and/or the investor.

The database can comprise characteristic data 17 entered manually by the user and/or originating from automated data sources available online.

In the latter case, as shown in figs. 2 and 3, the storage unit 12 can be connected, by means of the communication network 14, to an external archive 16 which contains further characteristic data 17 that can be imported into the database. In these cases, preparing the database can therefore provide to import further characteristic data 17 contained in the external archive 16 into the database.

It is obvious to the person of skill in the sector that it is also possible to update an already existing database by entering further data, in particular characteristic data 17, both manually and also automatically, by means of synchronization with automated sources such as the external archive 16.

The characteristic data 17 can comprise a plurality of data describing the financial entities.

The descriptive data can include economic indicators of the financial entities, such as balance sheet, turnover, credit or debit exposure, equity portfolio, share capital.

The descriptive data can also include other types of information, such as for example the number of employees, number and size of operating offices, countries in which the economic activity is exercised, number and size of the product sectors in which it operates, personal data.

The descriptive data can also include qualitative data, such as the strategic and competitive positioning of a financial entity, or technical assessments on management, or levels of diversification of the customer or supplier portfolio.

In some embodiments, the descriptive data, in particular the qualitative data, can also be associated with quantities that cannot, per se, be directly expressed by means of numerical parameters. In these cases, these data can be supplied in the database by associating, in a manner known to a person of skill in the field, numerical or Boolean indicators, for example scores, which quantify them or estimate their reliability.

With each descriptive datum there can be associated a date and/or a time interval and/or geographic information and/or product information to which it refers.

For example, the balance sheet data can refer to a certain number of years and be stored in the database based on the date they refer to.

For example, the geographic information can comprise the countries or cities between which determinate payments are made, while the product information can comprise the product sectors to which a company's investments refer.

In some embodiments, the characteristic data 17 also comprise a plurality of processed data, obtained by applying, to the descriptive data, mathematical models and/or statistical models and/or linear regression algorithms and/or methodologies based on artificial intelligence and/or models based on decision support methods and/or methods based on fuzzy technologies and/or non-linear regression algorithms and/or logistic regression algorithms and/or principal component analysis and/or cluster analysis.

For example, the processed data can comprise averages, medians, trends, statistical deviations from predetermined distributions, data aggregated on the basis of various criteria.

Furthermore, by processing the descriptive data on the basis of the date or time interval to which they refer, it is possible to obtain, as processed data, the time derivatives associated with the temporal evolution of a certain descriptive datum and of the time trends.

For example, starting from private transactional data relating to payments, and from the dates on which such payments were made, it is possible to associate, with a financial entity, a trend in regularity in payments, which can be added to the database as processed data.

Similarly, it is possible to obtain, for example, the trends in variation of balance sheet liabilities and/or the trend in the value of the equity portfolio over time.

In an example case, it is also possible to interpolate a characteristic datum, for example the turnover of a financial entity, in a determinate time interval in order to obtain its trend and/or extrapolate it for a subsequent time interval in order to obtain a forecast.

In some embodiments, it is possible to aggregate the descriptive data on the basis of geographical criteria, for example in order to calculate the total amount of investments of a financial company or of an investment fund in a determinate geographical area, thus determining the countries of greatest interest.

In some embodiments, it is possible to aggregate the descriptive data on the basis of product criteria, for example in order to calculate the total amount of investments of a financial company or of an investment fund in a determinate product sector, thus determining the product sectors of greatest interest.

In some embodiments, the method also comprises selecting one or more counterparts of the investor, among the financial entities, associated with the financial transaction.

This selection can be performed manually by the user, for example by means of the control and user interface unit 13 of the apparatus 10, automatically, by means of specific instructions, or even in mixed mode, that is, by supplying a list of counterparts selected automatically which is subsequently approved by the user.

Both the financial entity directly linked to the financial transaction as well as other financial entities, for example linked to the directly linked financial entity or to particular characteristic data 17 of the directly linked financial entity, can be associated as counterparts.

For example, if the financial transaction is a bond issue or the assessment of a company's solvency, it is possible to select, as the counterpart, respectively the company that has issued the bond issue or the consolidating company, the solvency of which is to be assessed.

For example, if the financial transaction is the assessment of a company's receivables, it is possible to select as counterparts both the company the credit exposure of which is to be assessed, as well as the debtor companies of the company to be assessed.

For example, if the financial transaction is the assessment of the financial statements of a financial entity that is a shareholder of a certain number of other companies, it is possible to select as counterparts both the financial entity as well as the companies in which the financial entity owns the shares.

The set of counterparts is therefore a subset of the financial entities contained in the database.

In some embodiments, the method comprises supplying a plurality of operating modules 18, each associated with a determinate analysis function 18a-18 selectively combinable in sequence with each other.

This plurality of operating modules 18 can for example be stored in one of the storage units 12 of the apparatus 10. By analysis functions 18a-18e we mean any procedure, operation, algorithm, which can be implemented by means of computer programming, suitable to operate on a set of input data in order to supply a set of output data.

In particular, each analysis function 18a-18e can be configured to receive as input data at least one subset of data, in particular of characteristic data 17, and/or one or more partial risk scores, and supply at least one partial risk score as output.

With the expression "selectively combinable in sequence with each other" we mean the fact that the operating modules 18 can be ordered according to the desired order of execution, and that the data obtained from a determinate analysis function associated with an operating module 18 can be used in sequence by the next module 18 to carry out its own part of the analysis, until the final result requested is supplied to the user.

In particular, each analysis function 18a-18e is configured at least to assign a partial risk score to a subset of data, in particular of characteristic data 17 associated at least with a counterpart, and/or to one or more partial risk scores supplied by any one of the plurality of analysis functions 18a-18e.

In some embodiments, in order to be selectively combinable, each operating module 18 can be independent from the others, and consequently also each analysis function 18a-18e can be independent from the others, for example not presenting calling dependencies from other analysis functions 18a-18-e and/or not necessarily requiring the execution of another analysis function 18a-18e in order to operate on the input data and/or being provided in modules or libraries of functions independent from each other.

The partial risk score supplied by an analysis function 18a-18e can therefore be obtained by analyzing both the characteristic data 17 contained in the database and also the outputs of other analysis functions 18a-18e.

For example, an analysis function 18a-18e can associate with characteristic data 17, such as the balance sheet of a counterpart which comprises total assets, net assets and liabilities, a partial risk score associated with the default probability at one year, and solvency and liquidity indicators.

The analysis functions 18a-18e can supply the partial risk score using mathematical models and/or statistical models, such as linear and non-linear regression algorithms, models based on decision support methods, methods based on fuzzy technologies, logistic regression algorithms, principal component analysis, cluster analysis.

These analysis functions 18a-18e can operate according to a sequence that is temporal and procedural, flexible and desired by the user.

A person of skill in the field will understand that the analysis functions 18a-18e can also have other characteristics and additional functionalities relating to the fact that they are selectively combinable in sequence with each other, for example they can be configured to process the descriptive data contained in the database in order to supply the processed data.

In some embodiments, in order to supply the partial risk score, one or more of the analysis functions 18a-18e employs an artificial intelligence trained on a set of financial entities of which the characteristic data 17 as well as the economic and financial trend are known, in order to detect the most relevant characteristic data 17 for the purposes of assessing the financial risk.

According to one example, taking a set of financial entities that show a positive trend on the stock exchange, for example for which the value of the shares has grown in a determinate time interval, the characteristic data 17 that they share and that differentiate them from other financial entities that have negative trends, or as positive trends, are identified.

Following the training of the artificial intelligence, the analysis function(s) 18a-18e that uses/use the artificial intelligence can associate a greater weight to the characteristic data 17 deemed relevant.

In some embodiments, the method comprises defining a desired analysis procedure, selectively combining the analysis functions 18a-18e according to a desired sequence, so that at least the last analysis function 18e assigns an overall risk score 20 to the partial risks scores supplied by some or all of the previous analysis functions 18.

In some embodiments, the definition of the analysis procedure can be performed manually by the user, for example by means of the control and user interface unit 13 of the apparatus 10, and/or automatically, on the basis of automatic algorithms and default parameters pre-set in the instructions.

Advantageously, the analysis procedure can be set on each occasion by the user, and is not pre-set rigidly in the programming phase at code level. It is therefore not necessary to rewrite the code in order to change the analysis procedure, allowing to overcome the disadvantages of known methods that are based on rigid calculation procedures, and to supply a flexible method, which allows a user to process very heterogeneous and variable data, and in particular to assess the financial risk of financial transactions even of a very variable type.

According to some embodiments, it can be provided that the different operating modules 18 available are indicated and shown on the user interface 13, and that the user can select on each occasion those to be used, and order them according to a desired order of execution, possibly temporarily disabling the other unnecessary ones.

For example, fig. 1 shows a possible analysis procedure, in which the analysis functions 18a-18e operate both on the characteristic data 17 and also on the outputs supplied by other analysis functions 18a-18e.

The overall risk score 20 is the partial risk score obtained from the last analysis function 18e provided by the analysis procedure.

In some embodiments, the overall risk score 20 can be obtained by mathematical processing of part or all of the partial risk scores.

In some embodiments, an analysis function 18a-18e can be provided, for example the last analysis function 18e, which calculates the overall risk score 20 as a weighted average of partial risk scores.

In such embodiments, the weights associated with each partial risk score can be determined a priori in the programming phase of the analysis functions 18a-18e.

In some embodiments, the overall risk score 20 can be associated with an estimated probability of default by the counterpart, which therefore entails a risk for the investor.

In such embodiments, the overall risk score 20 can be expressed as a positive real number, comprised in a predeterminate range, for example between 0 (low risk, impossible default) and 1 (high risk, certain default), or supplied in the form of a percentage.

In some embodiments, the overall risk score 20 can be expressed as a real number correlated to the variation in capital itself. In these embodiments, the overall risk score 20 can assume negative values, in the event a variation in capital to the detriment of the investor is expected, or positive values, in the event a variation in capital in favor of the investor is expected. Furthermore, in these embodiments, the modulus of this real number can be associated with an estimate of the extent of this variation in capital.

In some embodiments, a qualitative connotation can also be attributed to the financial risk, on the basis of the overall risk score 20, based on preset numerical intervals and/or customized by the user. For example, it is possible to predetermine numerical intervals associated with a "low", "moderate", "significant", or "high" financial risk, which can be communicated and displayed by means of a control and user interface unit 13, possibly also making use of color codes associated with the severity of the financial risk.

In some embodiments, the method comprises performing the desired analysis procedure, obtaining the overall risk score 20 associated with the financial risk of the financial transaction. The analysis procedure can for example be performed by the processing units 11 of the apparatus 10.

The analysis procedure can also be performed on a "cloud" type infrastructure.

The execution of the analysis procedure can provide to perform the analysis functions 18a-18e in one or more processing units 11, controlling the access and reading of the characteristic data 17 stored on the storage unit 12.

The execution can also provide to write, in the storage unit 12, the partial risk scores or generally other output data supplied by the analysis functions 18, so as to make them accessible to other analysis functions 18-18e.

The execution can also provide to display the overall risk score 20 and/or other output data to the user, by means of the control and user interface unit 13.

In embodiments in which the execution of the desired analysis procedure occurs by means of a plurality of processing units 11, it is possible to perform a plurality of analysis functions 18a-18e in parallel, each on one or more processing units 11.

For example, with reference to fig. 1, the first analysis functions 18a can be performed in parallel, since they only analyze characteristic data 17 and do not require a previous execution of other analysis functions 18b-18e.

When the first analysis functions 18a have been performed, it is possible to perform the second analysis functions 18b in parallel, which require, as input data, the outputs of the first analysis functions 18a.

Advantageously, the method and the apparatus 10 of the present invention allow to considerably reduce calculation times and optimize the calculation resources necessary to process data, in particular to assess the risk of a financial transaction, in a faster and more efficient manner than analogous solutions of the state of the art.

In some embodiments, it is also possible to update an overall risk score 20 by performing one or more additional analysis functions 18a-18e, with respect to said desired analysis procedure, which supply additional partial risk scores, and by performing the last analysis function 18e that updates the overall risk score 20 on the basis of said additional partial risk scores.

For example, if the user decides to change the analysis procedure by inserting additional analysis functions 18a-18e, for example third 18c and fourth analysis functions 18d, it is possible to update the overall risk score 20 by performing only the additional analysis functions 18c, 18d, without having to redefine, or perform once again, the whole analysis procedure. In particular, it is sufficient to select and enable the respective operating modules 18 associated respectively with the third 18c and fourth analysis functions 18d, ordering them in succession to the operating modules 18 associated with the first 18a and/or with the second analysis functions 18b.

This characteristic makes the method of the present invention more flexible than known methods based on rigid analysis procedures.

In example embodiments described by means of fig. 1, performing the desired analysis procedure also provides to select a subset of selected partial risk scores 19, supplied by part or all of the analysis functions 18a-18e performed previously.

In these embodiments, the last analysis function 18e can assess the overall risk score 20 on the basis of the partial risk scores 19 selected by the user, by means of the control and user interface unit 13 of the apparatus 10.

In such embodiments, the last analysis function 18e can assign an overall risk score 20 only to the subset of selected partial risk scores 19.

The analysis procedure can therefore be configured as:
- a first level of analysis 21, in which the data, in particular the characteristic data 17, are analyzed in order to determine partial risk scores;
- user approval of part or all the partial risk scores, in order to determine selected partial risk scores 19;
- a second level of analysis 22, in which the last analysis function 18e is performed in order to determine the overall risk score 20.

It is clear that modifications and/or additions of parts or steps may be made to the method and apparatus 10 as described heretofore, without departing from the field and scope of the present invention. It is also clear that, although the present invention has been described with reference to some specific examples, a person of skill in the art shall certainly be able to achieve many other equivalent forms of method and apparatus 10, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Method to process data, in particular to assess a financial risk relating to a financial transaction between an investor and one or more counterparts, said method comprising:
- preparing a database comprising characteristic data (17) relating to one or more financial entities;
- selecting, from said financial entities, said one or more counterparts of the investor associated with the financial transaction;
- supplying a plurality of operating modules (18) each associated with a respective analysis function (18a-18d) selectively combinable in sequence with each other, wherein each analysis function (18a-18e) is configured at least to assign a partial risk score to a subset of said characteristic data (17), associated at least with a counterpart, and/or to one or more partial risk scores, supplied by any one of said plurality of analysis functions (18a-18e) whatsoever, wherein said operating modules (18) constitute blocks of programs and instructions comprising at least one of either a procedure, operation or algorithm which can be implemented by means of computer programming, suitable to operate on a set of input data in order to supply a set of output data, wherein said characteristic data (17) comprise a plurality of descriptive data of said financial entities, each of which is associated with a date and/or a time interval and/or geographic information and/or product information to which it refers, and wherein said characteristic data (17) further comprise a plurality of processed data, obtained by applying, to said descriptive data, models based on decision support methods and/or methods based on fuzzy technologies and/or non-linear regression algorithms;
- selecting and enabling one or more operating modules (18) to define a desired analysis procedure, selectively combining said analysis functions (18a-18e) according to a desired sequence, so that at least the last analysis function (18e) assigns an overall risk score (20) to the partial risk scores supplied by some or all of the previous analysis functions (18), wherein said analysis procedure provides a plurality of analysis functions (18a-18b) performed in parallel and wherein when first analysis functions (18a) have been performed, it is possible to perform second analysis functions (18b) in parallel, which require, as input data, the outputs of the first analysis functions (18a);
- performing said desired analysis procedure, obtaining said overall risk score (20) associated with the financial risk of said financial transaction;
- displaying said operating modules (18) by means of a user interface (13) and allowing the user, by means of said user interface (13), to enable the operating modules (18) of interest and connect them in sequence to each other according to a determinate order of execution in order to obtain said desired analysis procedure;
wherein said database provides to import characteristic data (17) contained in an external archive (16) accessible by means of a communication network (14),wherein performing said desired analysis procedure occurs on a cloud type infrastructure,
wherein said analysis functions (18a-18e) employ, in order to supply said partial risk score, an artificial intelligence trained on a set of financial entities of which the characteristic data (17) and the economic and financial trend are known, in order to detect the most relevant characteristic data (17) for the purposes of assessing the financial risk,
wherein the execution of said desired analysis procedure occurs by means of a plurality of processing units (11), and
wherein performing said desired analysis procedure provides to perform a plurality of analysis functions (18) in parallel, each on one or more processing units (11).

2. Method as in claim 1, **characterized in that** performing said desired analysis procedure also provides to select a subset of selected partial risk scores (19) supplied by some or all of the preceding analysis functions (18a-18e), **and in that** said last analysis function (18e) assigns an overall risk score (20) to the subset of selected partial risk scores (19).

3. Method as in any claim hereinbefore, **characterized in that** it also provides to update an overall risk score (20) by adding other operating modules (18) and performing one or more additional analysis functions (18a-18e), with respect to said desired analysis procedure, which supply additional partial risk scores, and by performing the last analysis function (18e) which updates the overall risk score (20) on the basis of said additional partial risk scores.

4. Apparatus (10) to process data, in particular to assess a financial risk relating to a financial transaction between an investor and one or more counterparts, comprising:
- one or more processing units (11);
- one or more storage units (12),
- at least one control and user interface unit (13);
- a communication network (14), configured to put said units (11, 12, 13) in communication;
in at least one of said storage units (12) there being stored a database comprising characteristic data (17) relating to one or more financial entities;
said control and user interface unit (13) being configured at least to allow a user to select, from said financial entities, said one or more counterparts of the investor associated with the financial transaction;
in at least one of said storage units (12) there being stored a plurality of operating modules (18), each associated with a determinate analysis function (18a-18b) selectively combinable in sequence with each other, wherein each analysis function (18a-18e) is configured at least to assign a partial risk score to a subset of characteristic data (17), associated at least with a counterpart, and/or to one or more partial risk scores, supplied by any one of said plurality of analysis functions (18a-18e) whatsoever, wherein said operating modules (18) constitute blocks of programs and instructions comprising at least one of either a procedure, operation or algorithm which can be implemented by means of computer programming, suitable to operate on a set of input data in order to supply a set of output data, wherein said characteristic data (17) comprise a plurality of descriptive data of said financial entities, each of which is associated with a date and/or a time interval and/or geographic information and/or product information to which it refers, and wherein said characteristic data (17) further comprise a plurality of processed data, obtained by applying, to said descriptive data, models based on decision support methods and/or methods based on fuzzy technologies and/or non-linear regression algorithms;
said control and user interface unit (13) being configured at least to allow a user to select on each occasion one or more from the plurality of operating modules (18) available and define a desired analysis procedure, selectively combining said analysis functions (18a-18e) according to a desired sequence, so that at least the last analysis function (18e) assigns an overall risk score (20) to the partial risk scores supplied by some or all of previous analysis functions (18), wherein said analysis procedure provides a plurality of analysis functions (18a-18b) performed in parallel and wherein when first analysis functions (18a) have been performed, it is possible to perform second analysis functions (18b) in parallel, which require, as input data, the outputs of the first analysis functions (18a);
said one or more processing units (11) being configured at least to perform said desired analysis procedure, obtaining said overall risk score (20) associated with the financial risk of said financial transaction,
wherein said user interface (13) displays said operating modules (18) and allows the user to enable the operating modules (18) of interest and connect them in sequence to each other according to a determinate order of execution in order to obtain said desired analysis procedure,
wherein said storage unit (12) is connected, by means of said communication network (14), to an external archive (16) which contains characteristic data (17) which can be imported into said database and the apparatus comprises a cloud type infrastructure in which the performing of said desired analysis procedure occurs on,
wherein said analysis functions (18a-18e) employ, in order to supply said partial risk score, an artificial intelligence trained on a set of financial entities of which the characteristic data (17) and the economic and financial trend are known, in order to detect the most relevant characteristic data (17) for the purposes of assessing the financial risk,
wherein the execution of said desired analysis procedure occurs by means of a plurality of processing units (11), and
wherein performing said desired analysis procedure provides to perform a plurality of analysis functions (18) in parallel, each on one or more processing units (11).

5. Computer program storable in a medium readable by a computer that contains the instructions which, once performed by an apparatus (10) as in claim 4, determine the execution of the method as in any claim from 1 to 3.

## Patentansprüche

1. Verfahren zur Verarbeitung von Daten, insbesondere zur Bewertung eines finanziellen Risikos in Bezug auf eine Finanztransaktion zwischen einem Investor und einer oder mehreren Gegenparteien, wobei das Verfahren aufweist:
- Vorbereiten einer Datenbank, die charakteristische Daten (17) in Bezug auf eine oder mehrere Finanzentitäten aufweist;
- Auswählen, aus den Finanzentitäten, die eine oder mehreren Gegenparteien des Investors, die mit der Finanztransaktion verbunden sind;
- Bereitstellen einer Mehrzahl von Betriebsmodulen (18), die jeweils mit einer jeweiligen Analysefunktion (18a-18d) verbunden sind, die selektiv in Sequenz miteinander kombinierbar sind, wobei jede Analysefunktion (18a-18e) zumindest dazu eingerichtet ist, einer Teilmenge der charakteristischen Daten (17), die zumindest mit einer Gegenpartei verbunden sind, und/oder zu einem oder mehreren partiellen Risikowerten, die durch eine beliebige der Mehrzahl von Analysefunktionen (18a-18e) bereitgestellt werden, einen partiellen Risikowert zuzuweisen, wobei die Betriebsmodule (18) Blöcke aus Programmen und Anweisungen bilden, die zumindest eine von entweder einer Prozedur, einer Operation oder einem Algorithmus aufweisen, die mittels von Computerprogrammierung implementiert werden können, geeignet auf einem Satz von Eingabedaten zu arbeiten, um einen Satz von Ausgabedaten bereitzustellen, wobei die charakteristischen Daten (17) eine Mehrzahl von beschreibenden Daten der Finanzentitäten aufweisen, von denen jede mit einem Datum und/oder einem Zeitintervall und/oder geografischen Informationen und/oder Produktinformationen verbunden ist, auf die es sich bezieht, und wobei die charakteristischen Daten (17) ferner eine Mehrzahl von verarbeiteten Daten aufweisen, die durch Anwenden, auf die beschreibenden Daten, von Modellen, die auf Entscheidungsunterstützungsmethoden und/oder Methoden basierend auf Fuzzy-Technologien und/oder nichtlinearen Regressionsalgorithmen basieren, erhalten werden;
- Auswählen und Aktivieren eines oder mehrerer Betriebsmodule (18), um eine gewünschte Analyseprozedur zu definieren, selektives Kombinieren der Analysefunktionen (18a-18e) nach einer gewünschten Sequenz, so dass zumindest die letzte Analysefunktion (18e) den Teilrisikowerten, die durch einige oder alle der vorhergehenden Analysefunktionen (18) bereitgestellt wurden, einen Gesamtrisikowert (20) zuweist, wobei die Analyseprozedur eine Mehrzahl von Analysefunktionen (18a-18b) vorsieht, die parallel durchgeführt werden, und wobei, wenn erste Analysefunktionen (18a) durchgeführt worden sind, es möglich ist, zweite Analysefunktionen (18b) parallel durchzuführen, die, als Eingabedaten, die Ausgaben der ersten Analysefunktionen (18a) erfordern;
- Durchführen der gewünschten Analyseprozedur, Erhalten des Gesamtrisikowerts (20), der mit dem finanziellen Risiko der Finanztransaktion verbunden ist;
- Anzeigen der Betriebsmodule (18) mittels einer Benutzerschnittstelle (13) und dem Benutzer erlauben, mittels der Benutzerschnittstelle (13), die Betriebsmodule (18) von Interesse freizuschalten und sie nach einer bestimmten Ausführungsreihenfolge in Sequenz miteinander zu verbinden, um die gewünschte Analyseprozedur zu erhalten;
wobei die Datenbank vorsieht, charakteristische Daten (17) zu importieren, die in einem externen Archiv (16) enthalten sind, das mittels eines Kommunikationsnetzwerks (14) zugänglich ist, wobei Durchführen der gewünschten Analyseprozedur auf einer Cloudbasierten Infrastruktur erfolgt,
wobei die Analysefunktionen (18a-18e), um den partiellen Risikowert bereitzustellen, eine künstliche Intelligenz verwenden, die auf einem Satz von Finanzentitäten trainiert ist, deren charakteristische Daten (17) und deren ökonomischer und finanzieller Verlauf bekannt sind, um die relevantesten charakteristischen Daten (17) zum Zweck der Bewertung des finanziellen Risikos zu erkennen,
wobei die Ausführung der gewünschten Analyseprozedur mittels einer Mehrzahl von Verarbeitungseinheiten (11) erfolgt, und
wobei Durchführen der gewünschten Analyseprozedur vorsieht, eine Mehrzahl von Analysefunktionen (18) parallel durchzuführen, jeweils auf einer oder mehreren Verarbeitungseinheiten (11).

2. Verfahren nach Anspruch 1, **dadurch gekennzeichnet, dass** Durchführen der gewünschten Analyseprozedur auch vorsieht, eine Teilmenge ausgewählter partieller Risikowerte (19), die durch einige oder alle der vorhergehenden Analysefunktionen (18a-18e) bereitgestellt wurden, auszuwählen, **und dass** die letzte Analysefunktion (18e) der Teilmenge der ausgewählten partiellen Risikowerten (19) einen Gesamtrisikowert (20) zuweist.

3. Verfahren nach einem der vorstehenden Ansprüche, **dadurch gekennzeichnet, dass** es auch vorsieht, einen Gesamtrisikowert (20) durch Hinzufügen weiterer Betriebsmodule (18) und Durchführen einer oder mehrerer zusätzlicher Analysefunktionen (18a-18e), in Bezug auf die gewünschte Analyseprozedur, die zusätzliche partielle Risikowerte bereitstellen, zu aktualisieren, und durch Durchführen der letzten Analysefunktion (18e), die den Gesamtrisikowert (20) auf der Basis der zusätzlichen partiellen Risikowerte aktualisiert.

4. Vorrichtung (10) zur Verarbeitung von Daten, insbesondere zur Bewertung eines finanziellen Risikos in Bezug auf eine Finanztransaktion zwischen einem Investor und einer oder mehreren Gegenparteien, aufweisend:
- eine oder mehrere Verarbeitungseinheiten (11);
- eine oder mehrere Speichereinheiten (12),
- zumindest eine Steuer- und Benutzerschnittstelleneinheit (13);
- ein Kommunikationsnetzwerk (14), eingerichtet, um die Einheiten (11, 12, 13) miteinander in Kommunikation zu setzen;
wobei in zumindest einer der Speichereinheiten (12) eine Datenbank gespeichert ist, die charakteristische Daten (17) in Bezug auf eine oder mehrere Finanzentitäten aufweist; wobei die Steuer- und Benutzerschnittstelleneinheit (13) zumindest dazu eingerichtet ist, einem Benutzer zu erlauben, aus den Finanzentitäten, die eine oder mehreren Gegenparteien des Investors, die mit der Finanztransaktion verbunden sind, auszuwählen;
wobei in zumindest einer der Speichereinheiten (12) dort eine Mehrzahl von Betriebsmodulen (18) gespeichert ist, die jeweils mit einer bestimmten Analysefunktion (18a-18b) verbunden sind, die selektiv in Sequenz miteinander kombinierbar sind, wobei jede Analysefunktion (18a-18e) zumindest dazu eingerichtet ist, einer Teilmenge der charakteristischen Daten (17), die zumindest mit einer Gegenpartei verbunden sind, und/oder zu einem oder mehreren partiellen Risikowerten, die durch eine beliebige der Mehrzahl von Analysefunktionen (18a-18e) bereitgestellt werden, einen partiellen Risikowert zuzuweisen, wobei die Betriebsmodule (18) Blöcke aus Programmen und Anweisungen bilden, die zumindest eine von entweder einer Prozedur, einer Operation oder einem Algorithmus aufweisen, die mittels von Computerprogrammierung implementiert werden können, geeignet auf einem Satz von Eingabedaten zu arbeiten, um einen Satz von Ausgabedaten bereitzustellen, wobei die charakteristischen Daten (17) eine Mehrzahl von beschreibenden Daten der Finanzentitäten aufweisen, von denen jede mit einem Datum und/oder einem Zeitintervall und/oder geografischen Informationen und/oder Produktinformationen verbunden ist, auf die es sich bezieht, und wobei die charakteristischen Daten (17) ferner eine Mehrzahl von verarbeiteten Daten aufweisen, die durch Anwenden, auf die beschreibenden Daten, von Modellen, die auf Entscheidungsunterstützungsmethoden und/oder Methoden basierend auf Fuzzy-Technologien und/oder nichtlinearen Regressionsalgorithmen basieren, erhalten werden;
wobei die Steuer- und Benutzerschnittstelleneinheit (13) zumindest dazu eingerichtet ist, einem Benutzer zu erlauben, bei jeder Gelegenheit, eines oder mehrere aus der Mehrzahl der verfügbaren Betriebsmodule (18) auszuwählen und eine gewünschte Analyseprozedur zu definieren, wobei die Analysefunktionen (18a-18e) selektiv nach einer gewünschten Sequenz kombiniert werden, so dass zumindest die letzte Analysefunktion (18e) den Teilrisikowerten, die durch einige oder alle der vorhergehenden Analysefunktionen (18) bereitgestellt wurden, einen Gesamtrisikowert (20) zuweist, wobei die Analyseprozedur eine Mehrzahl von Analysefunktionen (18a-18b) vorsieht, die parallel durchgeführt werden, und wobei, wenn erste Analysefunktionen (18a) durchgeführt worden sind, es möglich ist, zweite Analysefunktionen (18b) parallel durchzuführen, die, als Eingabedaten, die Ausgaben der ersten Analysefunktionen (18a) erfordern;
wobei die eine oder mehrere Verarbeitungseinheiten (11) zumindest dazu eingerichtet sind, die gewünschte Analyseprozedur durchzuführen, den Gesamtrisikowert (20), der mit dem finanziellen Risiko der Finanztransaktion verbunden ist, zu erhalten,
wobei die Benutzerschnittstelle (13) die Betriebsmodule (18) anzeigt und dem Benutzer erlaubt, die Betriebsmodule (18) von Interesse freizuschalten und sie nach einer bestimmten Ausführungsreihenfolge in Sequenz miteinander zu verbinden, um die gewünschte Analyseprozedur zu erhalten,
wobei die Speichereinheit (12), mittels des Kommunikationsnetzwerks (14), mit einem externen Archiv (16) verbunden ist, das charakteristische Daten (17) enthält, die in die Datenbank importiert werden können, und wobei die Vorrichtung eine Cloud-basierte Infrastruktur aufweist, in der die Durchführung der gewünschten Analyseprozedur erfolgt, wobei die Analysefunktionen (18a-18e), um den partiellen Risikowert bereitzustellen, eine künstliche Intelligenz verwenden, die auf einem Satz von Finanzentitäten trainiert ist, deren charakteristische Daten (17) und deren ökonomischer und finanzieller Verlauf bekannt sind, um die relevantesten charakteristischen Daten (17) zum Zweck der Bewertung des finanziellen Risikos zu erkennen,
wobei die Ausführung der gewünschten Analyseprozedur mittels einer Mehrzahl von Verarbeitungseinheiten (11) erfolgt, und
wobei die Durchführung der gewünschten Analyseprozedur vorsieht, eine Mehrzahl von Analysefunktionen (18) parallel durchzuführen, jeweils auf einer oder mehreren Verarbeitungseinheiten (11).

5. Computerprogramm, speicherbar in einem von einem Computer lesbaren Medium, das die Anweisungen enthält, die, sobald durch eine Vorrichtung (10) nach Anspruch 4 ausgeführt, die Ausführung des Verfahrens nach einem der Ansprüche 1 bis 3 bestimmen.

## Revendications

1. Procédé pour traiter des données, en particulier pour évaluer un risque financier relatif à une transaction financière entre un investisseur et une ou plusieurs contreparties, ledit procédé comprenant les étapes consistant à :
- préparer une base de données comprenant des données caractéristiques (17) relatives à une ou plusieurs entités financières ;
- sélectionner, parmi lesdites entités financières, lesdites une ou plusieurs contreparties de l'investisseur associées à la transaction financière ;
- fournir une pluralité de modules de fonctionnement (18) associés chacun à une fonction d'analyse respective (18a-18d) pouvant être combinées sélectivement en séquence les unes avec les autres, dans lequel chaque fonction d'analyse (18a-18e) est configurée au moins pour attribuer un score de risque partiel à un sous-ensemble desdites données caractéristiques (17), associées au moins à une contrepartie, et/ou à un ou plusieurs scores de risque partiel, fournis par l'une quelconque de ladite pluralité de fonctions d'analyse (18a-18e) quelle qu'elle soit, dans lequel lesdits modules de fonctionnement (18) constituent des blocs de programmes et d'instructions comprenant au moins l'un d'une procédure, d'une opération ou d'un algorithme qui peut être mis en œuvre au moyen d'une programmation informatique, apte à fonctionner sur un ensemble de données d'entrée afin de fournir un ensemble de données de sortie, dans lequel lesdites données caractéristiques (17) comprennent une pluralité de données descriptives desdites entités financières, dont chacune est associée à une date et/ou à un intervalle de temps et/ou à des informations géographiques et/ou à des informations de produit auxquelles elle se réfère, et dans lequel lesdites données caractéristiques (17) comprennent en outre une pluralité des données traitées, obtenues en appliquant, auxdites données descriptives, des modèles basés sur des procédés d'aide à la décision et/ou des procédés basés sur des technologies floues et/ou des algorithmes de régression non linéaires ;
- sélectionner et permettre à un ou plusieurs modules de fonctionnement (18) de définir une procédure d'analyse souhaitée, en combinant sélectivement lesdites fonctions d'analyse (18a-18e) selon une séquence souhaitée, de sorte qu'au moins la dernière fonction d'analyse (18e) attribue un score de risque global (20) aux scores de risque partiel fournis par certaines ou la totalité des fonctions d'analyse précédentes (18), dans lequel ladite procédure d'analyse fournit une pluralité de fonctions d'analyse (18a-18b) exécutées en parallèle et dans lequel lorsque des premières fonctions d'analyse (18a) ont été exécutées, il est possible d'exécuter des secondes fonctions d'analyse (18b) en parallèle, qui nécessitent, en tant que données d'entrée, les sorties des premières fonctions d'analyse (18a) ;
- effectuer ladite procédure d'analyse souhaitée, obtenir ledit score de risque global (20) associé au risque financier de ladite transaction financière ;
- afficher lesdits modules de fonctionnement (18) par l'intermédiaire d'une interface utilisateur (13) et permettre à l'utilisateur, par l'intermédiaire de ladite interface utilisateur (13), d'activer les modules de fonctionnement (18) d'intérêt et de les connecter en séquence les uns aux autres selon un ordre d'exécution déterminé afin d'obtenir ladite procédure d'analyse souhaitée ;
dans lequel ladite base de données fournit des données caractéristiques d'importation (17) contenues dans une archive externe (16) accessible par l'intermédiaire d'un réseau de communication (14),dans lequel l'exécution de ladite procédure d'analyse souhaitée survient sur une infrastructure de type nuage,
dans lequel lesdites fonctions d'analyse (18a-18e) utilisent, afin de fournir ledit score de risque partiel, une intelligence artificielle entraînée sur un ensemble d'entités financières dont les données caractéristiques (17) et la tendance économique et financière sont connues, afin de détecter les données caractéristiques les plus pertinentes (17) aux fins d'évaluer le risque financier,
dans lequel l'exécution de ladite procédure d'analyse souhaitée survient par l'intermédiaire d'une pluralité d'unités de traitement (11), et
dans lequel l'exécution de ladite procédure d'analyse souhaitée permet d'exécuter une pluralité de fonctions d'analyse (18) en parallèle, chacune sur une ou plusieurs unités de traitement (11).

2. Procédé selon la revendication 1, **caractérisé en ce que** la réalisation de ladite procédure d'analyse souhaitée permet également de sélectionner un sous-ensemble de scores de risque partiel sélectionnés (19) fournis par certaines ou la totalité des fonctions d'analyse précédentes (18a-18e), **et en ce que** ladite dernière fonction d'analyse (18e) attribue un score de risque global (20) au sous-ensemble de scores de risque partiel sélectionnés (19).

3. Procédé selon l'une quelconque des revendications précédentes, **caractérisé en ce qu'**il prévoit également de mettre à jour un score de risque global (20) en ajoutant d'autres modules de fonctionnement (18) et en exécutant une ou plusieurs fonctions d'analyse supplémentaires (18a-18e), par rapport à ladite procédure d'analyse souhaitée, qui fournissent des scores de risque partiel supplémentaires, et en exécutant la dernière fonction d'analyse (18e) qui met à jour le score de risque global (20) sur la base desdits scores de risque partiel supplémentaires.

4. Appareil (10) de traitement de données, en particulier pour évaluer un risque financier relatif à une transaction financière entre un investisseur et une ou plusieurs contreparties, comprenant :
- une ou plusieurs unités de traitement (11) ;
- une ou plusieurs unités de stockage (12),
- au moins une unité de commande et d'interface utilisateur (13) ;
- un réseau de communication (14), configuré pour mettre lesdites unités (11, 12, 13) en communication ;
une base de données comprenant des données caractéristiques (17) relatives à une ou plusieurs entités financières étant stockée dans au moins une desdites unités de stockage (12) ;
ladite unité de commande et d'interface utilisateur (13) étant configurée au moins pour permettre à un utilisateur de sélectionner, parmi lesdites entités financières, lesdites une ou plusieurs contreparties de l'investisseur associées à la transaction financière ;
une pluralité de modules de fonctionnement (18) étant stockés dans au moins une desdites unités de stockage (12), chacun étant associé à une fonction d'analyse déterminée (18a-18b) pouvant être combinées sélectivement en séquence les unes avec les autres, dans lequel chaque fonction d'analyse (18a-18e) est configurée au moins pour attribuer un score de risque partiel à un sous-ensemble de données caractéristiques (17), associées au moins à une contrepartie, et/ou à un ou plusieurs scores de risque partiel, fournis par l'une quelconque de ladite pluralité de fonctions d'analyse (18a-18e) quelle qu'elle soit, dans lequel lesdits modules de fonctionnement (18) constituent des blocs de programmes et d'instructions comprenant au moins l'un d'une procédure, d'une opération ou d'un algorithme pouvant être mis en œuvre par l'intermédiaire d'une programmation informatique, pouvant fonctionner sur un ensemble de données d'entrée afin de fournir un ensemble de données de sortie, dans lequel lesdites données caractéristiques (17) comprennent une pluralité de données descriptives desdites entités financières, dont chacune est associée à une date et/ou à un intervalle de temps et/ou à des informations géographiques et/ou à des informations de produit auxquelles elle se réfère, et dans lequel lesdites données caractéristiques (17) comprennent en outre une pluralité de données traitées, obtenues en appliquant, auxdites données descriptives, des modèles basés sur des procédés d'aide à la décision et/ou des procédés basés sur des technologies floues et/ou des algorithmes de régression non linéaires ;
ladite unité de commande et d'interface utilisateur (13) étant configurée au moins pour permettre à un utilisateur de sélectionner à chaque occasion un ou plusieurs parmi la pluralité de modules de fonctionnement (18) disponibles et de définir une procédure d'analyse souhaitée, en combinant sélectivement lesdites fonctions d'analyse (18a-18e) selon une séquence souhaitée, de sorte qu'au moins la dernière fonction d'analyse (18e) attribue un score de risque global (20) aux scores de risque partiel fournis par certaines ou ou la totalité de fonctions d'analyse précédentes (18), dans lequel ladite procédure d'analyse fournit une pluralité de fonctions d'analyse (18a-18b) exécutées en parallèle et dans lequel lorsque des premières fonctions d'analyse (18a) ont été exécutées, il est possible d'exécuter des secondes fonctions d'analyse (18b) en parallèle, qui nécessitent, en tant que données d'entrée, les sorties des premières fonctions d'analyse (18a) ;
lesdites une ou plusieurs unités de traitement (11) étant configurées au moins pour effectuer ladite procédure d'analyse souhaitée, en obtenant ledit score de risque global (20) associé au risque financier de ladite transaction financière,
dans lequel ladite interface utilisateur (13) affiche lesdits modules de fonctionnement (18) et permet à l'utilisateur d'activer les modules de fonctionnement (18) d'intérêt et de les connecter en séquence les uns aux autres selon un ordre d'exécution déterminé afin d'obtenir ladite procédure d'analyse souhaitée,
dans lequel ladite unité de stockage (12) est connectée, par l'intermédiaire dudit réseau de communication (14), à une archive externe (16) qui contient des données caractéristiques (17) qui peuvent être importées dans ladite base de données et l'appareil comprend une infrastructure de type nuage dans laquelle l'exécution de ladite procédure d'analyse souhaitée survient,
dans lequel lesdites fonctions d'analyse (18a-18e) utilisent, afin de fournir ledit score de risque partiel, une intelligence artificielle entraînée sur un ensemble d'entités financières dont les données caractéristiques (17) et la tendance économique et financière sont connues, afin de détecter les données caractéristiques les plus pertinentes (17) aux fins d'évaluer le risque financier,
dans lequel l'exécution de ladite procédure d'analyse souhaitée survient par l'intermédiaire d'une pluralité d'unités de traitement (11), et
dans lequel l'exécution de ladite procédure d'analyse souhaitée permet d'exécuter une pluralité de fonctions d'analyse (18) en parallèle, chacune sur une ou plusieurs unités de traitement (11).

5. Programme informatique pouvant être stocké sur un support lisible par un ordinateur qui contient les instructions qui, une fois exécutées par un appareil (10) selon la revendication 4, déterminent l'exécution du procédé selon l'une quelconque des revendications 1 à 3.
